# EUROPÄISCHE PATENTSCHRIFT

(11) **EP 3 345 027 B1**
(45) Veröffentlichungstag und Bekanntmachung des Hinweises auf die Patenterteilung: **29.04.2020**
(21) Anmeldenummer: 15812991.6
(22) Anmeldetag: 07.12.2015
(51) Int. Cl.: G02B 6/38, H02J 3/18, H02J 13/00, H04B 10/2507

(54) **ANORDNUNG UND VERFAHREN ZUR NETZSTABILISIERUNG EINES WECHSELSPANNUNGSNETZES**
ARRANGEMENT AND METHOD FOR STABILISING AN AC GRID
AGENCEMENT ET PROCÉDÉ DE STABILISATION D'UN RÉSEAU À TENSION ALTERNATIF

(43) Veröffentlichungstag der Anmeldung: 11.07.2018
(73) Patentinhaber: Siemens Aktiengesellschaft, 80333 München (DE)
(72) Erfinder: ESCHER, Rico, 90431 Nürnberg (DE); LOTTES, Jürgen, 90491 Nürnberg (DE); PLATZ, Hans-Günther, 90409 Nürnberg (DE); SKAANOEY, Thomas, 7046 Trondheim (NO); STEGER, Manuel, 90408 Nürnberg (DE); ZSCHAU, Andreas, 90491 Nürnberg (DE); VON GEYMÜLLER, Heinrich, 90403 Nürnberg (DE)
(86) Internationale Anmeldenummer: PCT/EP2015/078794
(87) Internationale Veröffentlichungsnummer: WO 2017/097320

(56) Entgegenhaltungen:
- EP-A2- 1 022 838
- EP-A2- 2 348 326
- CN-U- 202 696 155
- CN-U- 203 978 730
- NL-C2- 1 003 411
- US-A1- 2002 171 896
- US-A1- 2011 026 922
- HANSON D J ET AL: "STATCOM: a new era of reactive compensation", POWER ENGINEERING JOURNAL, INSTITUTION OF ELECTRICAL ENGINEERS, HITCHIN, GB, Bd. 16, 1. Juni 2002 (2002-06-01), Seiten 151-160, XP002514401, ISSN: 0950-3366, DOI: 10.1049/PE:20020308

## Beschreibung

Die Erfindung betrifft ein Verfahren zur Netzstabilisierung eines Wechselspannungsnetzes mittels einer mit dem Wechselspannungsnetz verbundenen steuerbaren Kompensationsanlage.

Ein solches Verfahren wird oftmals zur Netzstabilisierung durch Regelung von Blindleistung im Wechselspannungsnetz verwendet und ist beispielsweise aus der WO 2015/003737 A1 bekannt. Bei dem bekannten Verfahren wird ein sogenannter modularer Mehrstufenumrichter (MMC) bereitgestellt, der eine Anzahl von Phasenmodulen aufweist, die der Anzahl der Phasen des Wechselspannungsnetzes entspricht, wobei jedes Phasenmodul mit der ihm zugeordneten Phase und die Phasenmodule miteinander in einer Dreieckschaltung verbunden sind. Jedes Phasenmodul umfasst eine Reihenschaltung von Submodulen, die jeweils Leistungshalbleiterschalter und einen Energiespeicher in einer Vollbrückenschaltung aufweisen. Das bekannte Verfahren dient zur Stabilisierung des Wechselspannungsnetzes durch eine Kompensation der Blindleistung im Wechselspannungsnetz. Auf diese Weise können beispielsweise schwankende Energiequellen, wie Offshore-Windparks, an ein Versorgungsnetz angeschlossen werden.

Auch bei anderen Offshore-Anlagen, wie beispielsweise Ölplattformen, deren Stromversorgung von Land aus über eine Wechselspannungsleitung gewährleistet wird, ist eine Netzstabilisierung, insbesondere eine Blindleistungs- und/oder Spannungsregelung meist notwendig. Dazu wird üblicherweise eine entsprechende steuerbare Kompensationsanlage, beispielsweise ein statischer Blindleistungskompensator (SVC) in der Nähe der Anlage auf See angeordnet und mit der Wechselspannungsleitung verbunden.

In der XP002514401 ist ein Verfahren zur Stabilisierung eines Wechselspannungsnetzes bekannt, bei dem ein STATCOM eingesetzt wird. Innerhalb der Regelung des STATCOM werden Lichtwellenleiter verwendet.

In der EP 1 022 838 A2 ist ein Verfahren zur Blindleistungskompensation in einem offshore- Windparknetz offenbart.

Ein weiteres Verfahren zum Regeln eines STATCOMs ist aus der CN202696155U bekannt.

Die CN203978730U beschreibt ein Überwachungssystem für ein Rotorblatt einer Windkraftanlage.

Eine Stromsensoreinheit mit einer programmierbaren Verstärkereinheit ist aus der EP2348326 bekannt.

Ein optischer Transmitter ist aus der NL1003411C bekannt. Der bekannte Transmitter umfasst zwei parallele optische Fasern, die jeweils eine andere Wellenlänge übermitteln können.

Die Aufgabe der Erfindung ist es, ein eingangs genanntes Verfahren vorzuschlagen, das eine einfache und zuverlässige Regelung der Netzstabilisierung ermöglicht.

Die Aufgabe wird durch ein artgemäßes Verfahren nach Anspruch 1 gelöst, bei dem eine Mehrzahl von Messwerten einer Regelgröße ermittelt wird, die Messwerte einer Datenverarbeitungseinheit zugeführt werden, mittels der Datenverarbeitungseinheit aus den Messwerten ein Istwert der Regelgröße in Abhängigkeit von einem zuvor berechneten Effektivwert der Messwerte abgeleitet wird, der Istwert in Form eines elektrischen Signals einem elektrooptischen Wandler zugeführt wird, der ausgangsseitig den Istwert in Form eines Lichtsignals einer ersten Wellenlänge bereitstellt, der Istwert einem ersten Transceiver zugeführt wird, der den Istwert in ein Lichtsignal einer zweiten, von der ersten unterschiedlichen, Wellenlänge umwandelt, der umgewandelte Istwert über einen Lichtwellenleiter an einen zweiten Transceiver übertragen wird, der zweite Transceiver den Istwert in ein Lichtsignal der ersten Wellenlänge umwandelt und an einen optoelektrischen Wandler leitet, der optoelektrische Wandler ausgangsseitig den Istwert in Form eines elektrischen Signals bereitstellt, das einer Regelungseinheit zugeführt wird, mittels der Regelungseinheit aus dem Istwert und einem vorgegebenen Sollwert der Regelgröße ein Wert einer Stellgröße der Regelung ermittelt wird und die Kompensationsanlage in Abhängigkeit vom Wert der Stellgröße gesteuert wird.

Über eine einfache Datenübertragung mittels optischer Signale hinaus erlaubt die Verwendung der Transreceiver eine Anpassung der Wellenlänge des zu übertragenden Lichtsignals für eine schnelle Signalübertragung über lange Distanzen. Ein Vorteil der vorliegenden Erfindung ist somit die Möglichkeit zur schnellen Regelung der Regelgröße über lange Distanzen. Dies erlaubt insbesondere die Regelung der Spannung und/oder der Blindleistung an einem Ort nah an einem beispielsweise sich auf See befindenden Verbraucher, während die Kompensationsanlage, mittels der die Spannung bzw. die Blindleistung im Wechselspannungsnetz beeinflusst wird, an Land angeordnet ist.

In dem zuvor angesprochenen Anwendungsfall der Energieversorgung einer Offshore-Ölplattform kann die Regelung an einem Regelungsort im Wechselspannungsnetz ortsnah an der Ölplattform durchgeführt werden, wobei die Kompensationsanlage weit entfernt an Land angeordnet ist. Die Entfernung zwischen dem Regelungsort und dem Umrichter kann dabei zwischen wenigen Kilometern und mehr als hundert Kilometern betragen. Die Messeinheit kann auf der Plattform der Offshore-Ölplattform angeordnet sein. Ebenso ist es möglich, die Regelung onshore, ortsnah an der Kompensationsanlage durchzuführen, während die Messung und beispielsweise ein Teil der Datenverarbeitung offshore durchgeführt wird.

Erfindungsgemäß werden zunächst Messwerte der Regelgröße, zweckmäßigerweise mittels einer geeigneten Messeinheit, ermittelt. Die Messwerte werden als Momentanwerte in sehr kurzen Zeitabständen, beispielsweise von weniger als 0,2 ms, gemessen. Ist die Regelgröße eine Spannung, so können die Momentanwerte der Spannung im Wechselspannungsnetz ermittelt werden. Wird eine andere Regelgröße verwendet, beispielsweise eine Blindleistung, so können entsprechend die Momentanwerte von Strom und Spannung ermittelt werden. Aus diesen Werten kann dann die Leistung beziehungsweise die Blindleistung abgeleitet werden. Bei einem mehrphasigen Wechselspannungsnetz wird das Verfahren und insbesondere die Ermittlung und Weiterverarbeitung von Messwerten für jede der Phasen ausgeführt. Vorzugsweise werden die Messwerte vor der weiteren Bearbeitung mittels eines geeigneten A/D-Wandlers digitalisiert.

Die Datenverarbeitungseinheit berechnet aus den Messwerten einen Effektivwert. Der Effektivwert ist im üblichen Sinne als ein Zeitintegral über einen Betragsquadrat der Momentanwerte definiert. Beispielsweise gilt für den Effektivwert Urms einer Spannung, dass Urms = (1/T ^{∗} Int (|U(t)|^2 dt))^(1/2), wobei U(t) die Momentanwerte der Spannnung bezeichnet und die Datenverarbeitungseinheit das Integral als eine entsprechende Summation ausführt. Vor oder nach der Berechnung des Effektivwertes können die Messwerte weiterer Bearbeitung, beispielsweise einer Filterung, insbesondere einer Tiefpassfilterung, unterzogen werden. Vorzugsweise wird die Berechnung des Effektivwertes mittels einer alpha-beta-Transformation durchgeführt, was eine besonders schnelle Berechnung in einem dreiphasigen System erlaubt.

Der Istwert der Regelgröße, beispielsweise ein Spannungsistwert, wird in Abhängigkeit von dem Effektivwert ermittelt. In einem besonders einfachen Fall ist der Istwert gleich dem Effektivwert. Der Istwert liegt am Ausgang der Datenverarbeitungseinheit als ein elektrisches Signal vor. Zur weiteren Übertragung an die Regelungseinheit des Umrichters wird der Istwert zunächst in ein Lichtsignal einer ersten Wellenlänge umgewandelt. Die Umwandlung erfolgt mittels des elektrooptischen Wandlers. Das Lichtsignal am Ausgang des elektrooptischen Wandlers kann beispielsweise an eine Übertragung mittels eines Multimode-Lichtwellenleiters angepasst sein, so dass der Istwert mittels des Multimode-Lichtwellenleiters an den ersten Transceiver übertragen wird. Der Istwert wird dann mittels des ersten Transceivers in das Lichtsignal der zweiten Wellenlänge umgewandelt, wobei die erste und die zweite Wellenlänge im Allgemeinen unterschiedlich sind. Beispielsweise kann die erste Wellenlänge kleiner als die zweite Wellenlänge sein. Bevorzugt liegt die erste Wellenlänge im Bereich von 1000 nm bis 1400 nm und die zweite Wellenlänge im Bereich von 1400 nm bis 1800 nm. Bevorzugt wird dazu das elektrische Signal mittels eines Small Form-Factor Pluggable (SFP) auf das Lichtsignal der zweiten Wellenlänge transparent umgesetzt. Mit der Umwandlung erfolgt zugleich eine Anpassung des Signals an einen Lichtwellenleiter, mittels dessen eine Signalübertragung über eine lange Distanz durchführbar ist. Anschließend wird der Istwert über den Lichtwellenleiter an den zweiten Transceiver geleitet. Selbstverständlich können weitere Transceiver vorgesehen sein, die voneinander beabstandet angeordnet und über Lichtwellenleiter miteinander verbunden sind, so dass der Istwert über eine solche Kaskade von Transceivern übermittelt wird. Mittels des zweiten Transceivers kann der Istwert wieder in das Lichtsignal der ersten Wellenlänge umgewandelt werden. Anschließend kann der Istwert mittels des optoelektrischen Wandlers in ein elektrisches Signal umgewandelt und der Regelungseinheit zur Verfügung gestellt werden. Mittels der Regelungseinheit kann aus dem Istwert und einem vorgegebenen Sollwert der Regelgröße, beispielsweise einem Spannungssollwert oder einem Leistungssollwert bzw. einem Blindleistungssollwert, über eine Regeldifferenz der Wert einer Stellgröße ermittelt werden. Der Wert der Stellgröße, beispielsweise einer Stellspannung oder eines Stellstromes kann einer Steuereinrichtung der Kompensationsanlage zugeführt werden, die entsprechende Steuersignale erzeugt. Als steuerbare Kompensationsanlage kann jede geeignete steuerbare Parallel- oder Serienkompensationsanlage verwendet werden, beispielsweise ein sogenannter Thyristor Controlled Reactor (TCR) bzw. Capacitor (TSC) oder auch ein Umrichter, insbesondere ein MMC, der in diesem Zusammenhang auch als STATCOM bezeichnet wird. Im letzteren Fall kann die Stellgröße der Umrichterstellspannung entsprechen, also derjenigen Spannung, die am Umrichter eingestellt werden soll, um die Regelgröße zu regeln.

Mittels des erfindungsgemäßen Verfahrens ist demnach eine Fernregelung möglich, die es erlaubt, die Regelung der Leistungsübertragung an einem beliebigen Ort im Wechselspannungsnetz durchzuführen, der auch weit entfernt vom Ort des Umrichters liegen kann. Auf diese Weise kann vorteilhaft die Anordnung des Umrichters derart gewählt werden, dass Kosten gespart und die Zuverlässigkeit der Regelung erhöht wird. Beispielsweise in dem Anwendungsfall der Leistungsregelung an einer Offshore-Anlage kann der Umrichter an Land angeordnet sein. Dadurch können hohe Kosten einer Offshore-Umrichterplattform vermieden werden. Zudem ist die Wartung des an Land angeordneten Umrichters durch dessen verbesserte Zugänglichkeit vereinfacht.

Um die Regelung kontinuierlich durchführen zu können, wird das Verfahren zweckmäßigerweise wiederholt durchgeführt. Der Istwert wird dabei wiederholt berechnet und über den Lichtwellenleiter übertragen. Die Übertragung wird dabei in zeitlichen Abständen von weniger als 1 ms durchgeführt. Dadurch können auch besonders hohe Anforderungen an die Genauigkeit der Regelung erfüllt werden.

Bevorzugt wird als Lichtwellenleiter ein Monomode-Lichtwellenleiter verwendet. Ein Monomode-Lichtwellenleiter ermöglicht eine Übertragung über besonders lange Distanzen, ohne, dass eine Verstärkung des Signals notwendig wird.

Vorzugsweise wird der Istwert vor dem Übertragen an die Regelungseinheit verstärkt. Der Verstärkungsfaktor ist geeigeneterweise an die Länge der Übertragungsleitung angepasst und kann dabei von der jeweiligen Dämpfung der Leitung abhängen. Beispielsweise kann bei einer Länge von 10 km ein Verstärkungsfaktor von 2 dB ausreichend sein. Bei langen Übertragungsleitungen kann ein Verstärkungsfaktor von mindestens 20 dB, besonders bevorzugt von mindestens 40 dB, gewählt werden. Da das Lichtsignal im Lichtwellenleiter zwangsläufig Verlusten unterliegt, ist es durch die Verstärkung möglich, das Lichtsignal auch über Distanzen von mehr als 100 km, sogar mehr als 150 km zu übertragen. Beispielsweise ergibt sich bei einer Signalreserve von 47 dB und einer Dämpfung im Lichtwellenleiter von 0,2 dB/km eine Reichweite von über 200 km.

Zur Verbesserten Überwachung der Regelung, insbesondere der Funktionsfähigkeit der Messeinheit wird als vorteilhaft angesehen, wenn mittels einer Überwachungseinheit zur Überwachung der Messeinheit ein Überwachungssignal erzeugt wird, das über den Lichtwellenleiter an den zweiten Transceiver übermittelt wird, wobei, falls das Überwachungssignal eine vorbestimmte Bedingung erfüllt, ein Alarmsignal zur Fehleranzeige generiert wird. Beispielsweise kann mittels des ersten und/oder des zweiten Transceivers auf diese Weise der Empfangspegel und/oder der Sendepegel überwacht werden. Daraus können Informationen darüber gewonnen werden, ob ein Austauschen des Empfangs- bzw. des Sendegerätes notwendig ist. Es kann zudem mindestens ein weiterer Lichtwellenleiter vorgesehen sein, so dass die Lichtwellenleiter parallel zueinander die Transceiver verbinden und zusätzliche, voneinander unabhängige Möglichkeit der Kommunikation erlauben, beispielsweise eine Kreuzredundanz.

Bevorzugt wird als Überwachungssignal ein binäres Signal verwendet. Dies ermöglicht eine besonders einfache und schnelle Übertragung.

Als besonders bevorzugt wird angesehen, wenn das Überwachungssignal und der Istwert in gleichen zeitlichen Abständen übertragen werden. Auf diese Weise ist eine besonders genaue Überwachung realisiert.

Die Erfindung betrifft ferner eine Anordnung zur Netzstabilisierung eines Wechselspannungsnetzes mit einer mit dem Wechselspannungsnetz verbindbaren steuerbaren Kompensationsanlage, einer Regelungseinheit, die ausgangsseitig mit der Kompensationsanlage verbunden und dazu eingerichtet ist, aus einem Istwert und einem Sollwert einer Regelgröße einen Wert einer Stellgröße zu ermitteln, wobei die Kompensationsanlage in Abhängigkeit vom Wert der Stellgröße steuerbar ist, einer Messeinheit zur Ermittlung von Messwerten zur Ableitung einer Regelgröße sowie einer die Messeinheit und die Regelungseinheit verbindenden Übertragungsleitung. Eine solche Anordnung ist bereits aus der zuvor zitierten Druckschrift WO 2015/003737 A1 bekannt.

Die Aufgabe der Erfindung ist es, eine derartige Anlage vorzuschlagen, die eine einfache und zuverlässige Regelung erlaubt.

Die Aufgabe wird bei einer artgemäßen Anlage nach Anspruch 9 dadurch gelöst, dass die Anlage ferner umfasst: eine Datenverarbeitungseinheit, die dazu eingerichtet ist, aus einer Mehrzahl von ermittelten Messwerten einen Effektivwert der Messwerte und in Abhängigkeit von dem Effektivwert einen Istwert der Regelgröße zu bestimmen, einen elektrooptischen Wandler, der eingangsseitig mit der Datenverarbeitungseinheit und ausgangsseitig mit einem ersten Transceiver verbunden und dazu eingerichtet ist, den ihm zugeführten Istwert in Form eines elektrischen Signals in ein Lichtsignal einer ersten Wellenlänge umzuwandeln, einen ersten Transceiver, der eingangsseitig mit dem elektrooptischen Wandler und ausgangsseitig mit der Übertragungsleitung verbunden und dazu eingerichtet ist, den ihm zugeführten Istwert in ein Lichtsignal einer zweiten, von der ersten unterschiedlichen, Wellenlänge umzuwandeln, wobei die Übertragungsleitung ein Lichtwellenleiter ist, der dazu eingerichtet ist, den in ein Lichtsignal umgewandelten Istwert zu übertragen, einen zweiten Transceiver, der eingangsseitig mit der Übertragungsleitung und ausgangsseitig mit einem optoelektrischen Wandler verbunden und dazu eingerichtet ist, den Istwert in das Lichtsignal der ersten Wellenlänge umzuwandeln, wobei der optoelektrische Wandler ausgangsseitig mit der Regelungseinheit verbunden und dazu eingerichtet ist, den Istwert in ein elektrisches Signal umzuwandeln.

Die Vorteile der erfindungsgemäßen Anlage ergeben sich insbesondere aus der Möglichkeit, das erfindungsgemäße Verfahren durchzuführen.

Gemäß einer bevorzugten Ausführungsform der Erfindung weist der Lichtwellenleiter eine Länge von über 100 km auf.

Bevorzugt ist die Anordnung dazu eingerichtet, den Istwert in zeitlichen Abständen von weniger als 1 ms wiederholt zu bestimmen und zu übertragen.

Vorzugsweise ist der Lichtwellenleiter ein Monomode-Lichtwellenleiter.

Bevorzugt umfasst die Anordnung ferner eine Verstärkereinheit, der dazu eingerichtet ist, den Istwert mit einem Verstärkungsfaktor von mindestens 20 dB zu verstärken.

Geeigneterweise ist die Messeinheit zur Ermittlung von Meswerten einer Spannung im Wechselspannungsnetz als Regelgröße eingerichtet.

Gemäß einem Ausführungsbeispiel der Erfindung umfasst die Anordnung ferner eine Überwachungseinheit, die dazu eingerichtet ist, zur Überwachung der Messeinheit ein Überwachungssignal zu erzeugen, das über den Lichtwellenleiter an den zweiten Transceiver übermittelt werden kann, wobei, falls das Überwachungssignal eine vorbestimmte Bedingung erfüllt, ein Alarmsignal zur Fehleranzeige generierbar ist.

Die Kompensationsanlage ist bevorzugt ein modularer Mehrstufenumrichter (MMC). In diesem Fall ist jeder Phase des Wechselspannungsnetzes ein Phasenmodul des Umrichters zugeordnet. Jedes Phasenmodul weist dabei eine Reihenschaltung zweipoliger Submodule auf, wobei die Submodule als Vollbrückenschaltungen ausgebildet sind. Jede Vollbrückenschaltung umfasst einen Energiespeicher und Leistungshalbleiterschalter, so dass mittels einer Steuerung der Leistungshalbleiterschalter an den Polen bzw. Klemmen des Submoduls eine Submodulspannung erzeugbar ist, die gleich der am Energiespeicher abfallende Energiespeicherspannung, gleich der Energiespeicherspannung jedoch mit entgegengesetzter Polarität oder gleich einer Spannung null ist. Die Phasenmodule des Umrichters können gemäß einer Dreiecksschaltung oder einer Sternschaltung miteinander verbunden sein. Mittels des MMC kann vorteilhaft eine nahezu sinusförmige Spannung erzeugt werden.

Die Erfindung soll im Folgenden anhand der Figuren 1 bis 3 weiter erläutert werden.
Figur 1 zeigt ein Ausführungsbeispiel der erfindungsgemäßen Anlage in schematischer Darstellung;
Figur 2 zeigt einen Umrichter der Anlage aus Figur 1;
Figur 3 zeigt ein Submodul des Umrichters aus Figur 2.

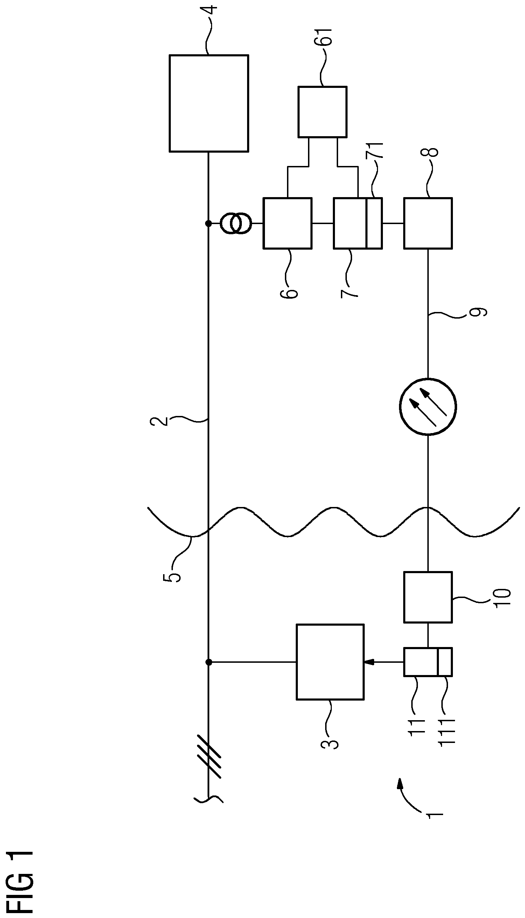

Im Einzelnen ist in Figur 1 eine Anordnung 1 zum Regeln der Leistungsübertragung in einem dreiphasigen Wechselspannungsnetz 2 mit einer Kompensationsalage in Form eines Umrichters 3, der mit dem Wechselspannungsnetz 2 verbunden ist.

Das Wechselspannungsnetz 2 dient zur Energieversorgung einer Offshore-Anlage 4, die in einem Meer oder einer See auf einer entsprechenden Plattform angeordnet ist. Demgegenüber ist der Umrichter 3 an Land angeordnet. Die Uferlinie ist in Figur 1 mittels einer gewellten Linie 5 angedeutet.

Die Anordnung 1 umfasst eine Messeinheit 6, die ortsnah an der Offshore-Anlage 4 angeordnet ist. Die Messeinheit 6 kann beispielsweise auf der Plattform der Offshore-Anlage angeordnet sein. Mittels der Messeinheit 6 bzw. eines zugeordneten Messwandlers können Messwerte der Spannung, des Stromes sowie andere Messwerte, wie Temperatur, erfasst werden. Die Messwerte werden an eine Datenverarbeitungseinheit 7 übermittelt. Die Datenverarbeitungseinheit 7 befindet sich ebenfalls ortsnah an der Offshore-Anlage 4. Mittels der Datenverarbeitungseinheit 7 werden die Messwerte digitalisiert und gefiltert, worauf ein Effektivwert der Messwerte berechnet wird. Im vorliegenden Beispiel werden Spannungsmesswerte ermittelt, woraus ein Spannungsistwert ermittelt wird. Der Spannungsistwert wird anschließend mittels eines elektrooptischen Wandlers 71, der im vorliegenden Beispiel räumlich in die Datenverarbeitungseinheit 7 integriert, in ein Lichtsignal einer Wellenlänge von 1300 nm umgewandelt und mittels eines multi mode Lichtwellenleiters an einen ersten Transceiver 8 übermittelt. In die Datenverarbeitungseinheit 7 oder in den ersten Transceiver 8 ist ferner eine Verstärkereinheit integriert, mittels der das Signal entsprechend der Verluste in der Übertragungsleitung 9 verstärkt wird. Mittels des ersten Transceivers 8 wird der Spannungsistwert in ein Lichtsignal einer Wellenlänge von 1500 nm umgewandelt und in einen Monomode-Lichtwellenleiter 9 eingespeist. Über den Lichtwellenleiter 9, dessen Länge im in Figur 1 dargestellten Ausführungsbeispiel 170 km beträgt, wird der Leistungsistwert an einen zweiten Transceiver 10 übermittelt, der ortsnah am Umrichter 3 angeordnet ist und das Signal in ein Lichtsignal der Wellenlägen von 1300 nm umwandelt, das anschließend mittels eines optoelektrischen Wandlers 111 in ein elektrisches Signal umgewandelt und einer Regelungseinheit 11 des Umrichters zur Verfügung gestellt wird. Die Regelungseinheit 11 bestimmt aus dem übermittelten Spannungsistwert und einem vorgegebenen Spannungssollwert eine Umrichterstellspannung oder einen Umrichterstellstrom und leitet diese an eine Steuereinheit des Umrichters 3, die eine entsprechende Steuerung der Leistungshalbleiterschalter des Umrichters 3 vornimmt.

Die Anordnung 1 umfasst im vorliegenden Ausführungsbeispiel eine Überwachungseinheit 61, die dazu eingerichtet ist, zur Überwachung der Messeinheit 6 ein Überwachungssignal zu erzeugen, das über den Lichtwellenleiter 9 an den zweiten Transceiver 10 übermittelt werden kann. Falls das Überwachungssignal eine vorbestimmte Bedingung erfüllt, beispielsweise falls das Überwachungssignal einen Wert aufweist, der unterhalb einer vorbestimmten Schwelle liegt, so wird ein Alarmsignal zur Fehleranzeige erzeugt.

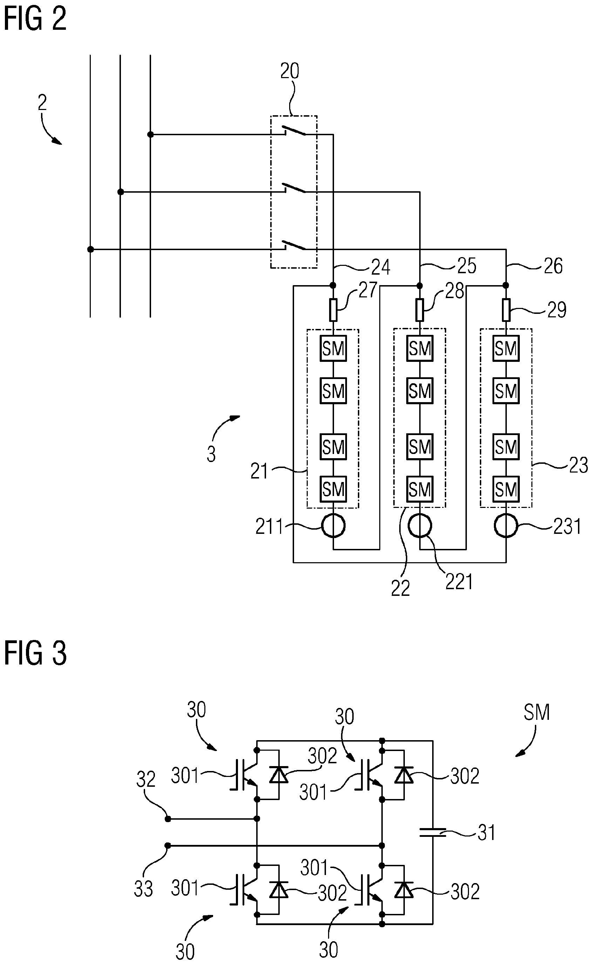

In Figur 2 ist ein Ausführungsbeispiel des Umrichters 3 aus Figur 1 dargestellt. Der Umrichter 3 ist an das Wechselspannungsnetz 2 angeschlossen. Zwischen dem Umrichter 3 und dem Wechselspannungsnetz 2 ist ein Leistungsschalter 20 geschaltet. Mittels des Leistungsschalters 20 kann der Umrichter 3 beim Auftreten eines Fehlers vom Wechselspannungsnetz 2 getrennt werden. Der Umrichter 3 ist ein sogenannter modularer Mehrstufenumrichter (MMC) und umfasst Phasenmodule 21, 22 und 23, von denen jedes einer der drei Phasen 24, 25 bzw. 26 des Wechselspannungsnetzes 2 zugeordnet ist. Jedes Phasenmodul 21, 22, 23 umfasst seinerseits mehrere in Reihe geschaltete Submodule SM. In der Darstellung der Figur 2 weist jedes Phasenmodul 21 - 23 vier Submodule SM, deren Anzahl jedoch im Allgemeinen beliebig und an die jeweilige Anwendung angepasst sein kann. Zusätzlich ist jedem Phasenmodul eine Induktivität 27, 28 bzw. 29 sowie Messvorrichtungen 211, 221 bzw. 231 zur Stromerfassung zugeordnet.

Figur 3 zeigt das Submodul SM der Figur 2. Das Submodul SM umfasst vier Leistungshalbleiterschalteinheiten 30 sowie einen Energiespeicher in Form eines Leistungskondensators 31. Jede Leistungshalbleiterschalteinheit 30 weist einen Leistungshalbleiter in Form eines IGBT 301 und eine dazu antiparallele Diode 302 auf.

Das Submodul SM ist als Vollbrückenschaltung ausgebildet. Durch eine entsprechende Ansteuerung der einzelnen Leistungshalbleiter 301 kann dem Leistungskondensator 31 Energie zugeführt oder entnommen werden. Auf diese Weise kann an den Anschlüssen bzw. Polen 32 und 33 des Submoduls SM die am Energiespeicher abfallende Spannung, eine entgegengesetzt gerichtete Spannung oder auch eine Spannung null eingestellt werden. Bezüglich weiterer Details des Aufbaus und der Funktionsweise des Umrichters 3 und des Submoduls SM wird hiermit auf die zuvor genannte Druckschrift WO 2015/003737 A1 verwiesen.

## Patentansprüche

1. Verfahren zur Netzstabilisierung eines Wechselspannungsnetzes (2) mittels einer mit dem Wechselspannungsnetz verbundenen steuerbaren Kompensationsanlage (3), bei dem
- eine Mehrzahl von Messwerten einer Regelgröße ermittelt wird,
- die Messwerte einer Datenverarbeitungseinheit (7) zugeführt werden,
- mittels der Datenverarbeitungseinheit (7) aus den Messwerten ein Istwert der Regelgröße in Abhängigkeit von einem zuvor berechneten Effektivwert der Messwerte abgeleitet wird,
- der Istwert in Form eines elektrischen Signals einem elektrooptischen Wandler (71) zugeführt wird, der ausgangsseitig den Istwert in Form eines Lichtsignals einer ersten Wellenlänge bereitstellt,
- der Istwert einem ersten Transceiver (8) zugeführt wird, der den Istwert in ein Lichtsignal einer zweiten, von der ersten unterschiedlichen, Wellenlänge umwandelt,
- der umgewandelte Istwert über einen Lichtwellenleiter (9) an einen zweiten Transceiver (10) übertragen wird,
- der zweite Transceiver (10) den Istwert in ein Lichtsignal der ersten Wellenlänge umwandelt und an einen optoelektrischen Wandler (111) leitet,
- der optoelektrische Wandler (111) ausgangsseitig den Istwert in Form eines elektrischen Signals bereitstellt, das einer Regelungseinheit (11) der Kompensationsanlage (3) zugeführt wird,
- mittels der Regelungseinheit (11) aus dem Istwert und einem vorgegebenen Sollwert der Regelgröße ein Wert einer Stellgröße der Regelung ermittelt wird und
- die Kompensationsanlage (3) in Abhängigkeit vom Wert der Stellgröße gesteuert wird.

2. Verfahren nach Anspruch 1, wobei das Verfahren wiederholt durchgeführt wird, wobei der Istwert in zeitlichen Abständen von weniger als 1 ms übertragen wird.

3. Verfahren nach Anspruch 1 oder 2, wobei als Lichtwellenleiter (9) ein Monomode-Lichtwellenleiter verwendet wird.

4. Verfahren einem der Ansprüche 1 bis 3, wobei der Istwert vor dem Übertragen an die Regelungseinheit (11) mit einem Verstärkungsfaktor von mindestens 20 dB verstärkt wird.

5. Verfahren nach einem der vorangehenden Ansprüche, wobei als Regelgröße eine Spannung im Wechselspannungsnetz (2) verwendet wird.

6. Verfahren nach einem der vorangehenden Ansprüche, wobei mittels einer Überwachungseinheit (61) zur Überwachung der Messeinheit ein Überwachungssignal erzeugt wird, das über den Lichtwellenleiter (9) an den zweiten Transceiver (10) übermittelt wird, wobei, falls das Überwachungssignal eine vorbestimmte Bedingung erfüllt, ein Alarmsignal zur Fehleranzeige generiert wird.

7. Verfahren nach Anspruch 6, wobei als Überwachungssignal ein binäres Signal verwendet wird.

8. Verfahren nach einem der Ansprüche 6 oder 7, wobei das Überwachungssignal und der Istwert in gleichen zeitlichen Abständen übertragen werden.

9. Anordnung (1) zur Netzstabilisierung eines Wechselspannungsnetzes (2) mit
- einer mit dem Wechselspannungsnetz (2) verbindbaren steuerbaren Kompensationsanlage (3),
- einer Regelungseinheit (11), die ausgangsseitig mit der Kompensationsanlage (3) verbunden und dazu eingerichtet ist, aus einem Istwert und einem Sollwert einer Regelgröße einen Wert einer Stellgröße zu ermitteln, wobei die Kompensationsanlage (3) in Abhängigkeit vom Wert der Stellgröße steuerbar ist,
- einer Messeinheit (6) zur Ermittlung von Messwerten zur Ableitung einer Regelgröße sowie
- einer die Messeinheit (6) und die Regelungseinheit (11) verbindenden Übertragungsleitung (9), **gekennzeichnet durch**
- eine Datenverarbeitungseinheit (7), die dazu eingerichtet ist, aus einer Mehrzahl von ermittelten Messwerten einen Effektivwert der Messwerte und in Abhängigkeit von dem Effektivwert einen Istwert der Regelgröße zu bestimmen,
- einen elektrooptischen Wandler (71), der eingangsseitig mit der Datenverarbeitungseinheit (7) und ausgangsseitig mit einem ersten Transceiver (8) verbunden und dazu eingerichtet ist, den ihm zugeführten Istwert in Form eines elektrischen Signals in ein Lichtsignal einer ersten Wellenlänge umzuwandeln, wobei
- der erste Transceiver (8) ausgangsseitig mit der Übertragungsleitung (9) verbunden und dazu eingerichtet ist, den ihm zugeführten Istwert in ein Lichtsignal einer zweiten, von der ersten unterschiedlichen, Wellenlänge umzuwandeln, wobei die Übertragungsleitung (9) ein Lichtwellenleiter ist, der dazu eingerichtet ist, den in ein Lichtsignal umgewandelten Istwert zu übertragen,
- einen zweiten Transceiver (10), der eingangsseitig mit der Übertragungsleitung (9) und ausgangsseitig mit einem optoelektrischen Wandler (111) verbunden und dazu eingerichtet ist, den Istwert in das Lichtsignal der ersten Wellenlänge umzuwandeln, wobei
- der optoelektrische Wandler (111) ausgangsseitig mit der Regelungseinheit (11) verbunden und dazu eingerichtet ist, den Istwert in ein elektrisches Signal umzuwandeln.

10. Anordnung (1) nach Anspruch 9, wobei der Lichtwellenleiter (9) eine Länge von über 100 km aufweist.

11. Anordnung (1) nach Anspruch 9 oder 10, wobei die Anordnung (1) dazu eingerichtet ist, den Istwert in zeitlichen Abständen von weniger als 1 ms wiederholt zu bestimmen und zu übertragen.

12. Anordnung (1) nach einem der Ansprüche 8 oder 9, wobei der Lichtwellenleiter (9) ein Monomode-Lichtwellenleiter ist.

13. Anordnung (1) nach einem der Ansprüche 9 bis 12, wobei die Anordnung (1) ferner eine Verstärkereinheit (8) umfasst, der dazu eingerichtet ist, den Istwert mit einem Verstärkungsfaktor von mindestens 20 dB zu verstärken.

14. Anordnung (1) nach einem der Ansprüche 9 bis 13, wobei die Messeinheit (6) zur Ermittlung von Messwerten einer Spannung im Wechselspannungsnetz (2) als Regelgröße eingerichtet ist.

15. Anordnung (1) nach einem der Ansprüche 9 bis 14, wobei die Anordnung (1) ferner eine Überwachungseinheit (61) umfasst, die dazu eingerichtet ist, zur Überwachung der Messeinheit (6) ein Überwachungssignal zu erzeugen, das über den Lichtwellenleiter (9) an den zweiten Transceiver (10) übermittelt werden kann, wobei, falls das Überwachungssignal eine vorbestimmte Bedingung erfüllt, ein Alarmsignal zur Fehleranzeige generierbar ist.

## Claims

1. Method for the grid stabilization of an AC voltage grid (2) by means of a controllable compensation installation (3) connected to the AC voltage grid, wherein
- a plurality of measured values of a controlled variable are determined,
- the measured values are fed to a data processing unit (7),
- by means of the data processing unit (7), an actual value of the controlled variable is derived from the measured values depending on a previously calculated root-mean-square value of the measured values,
- the actual value is fed in the form of an electrical signal to an electro-optical transducer (71), which provides the actual value in the form of a light signal of a first wavelength on the output side,
- the actual value is fed to a first transceiver (8), which converts the actual value into a light signal of a second wavelength, which is different from the first wavelength,
- the converted actual value is transmitted to a second transceiver (10) via an optical waveguide (9),
- the second transceiver (10) converts the actual value into a light signal of the first wavelength and guides it to an optoelectrical transducer (111),
- on the output side, the optoelectrical transducer (111) provides the actual value in the form of an electrical signal, which is fed to a closed-loop control unit (11) of the compensation installation (3),
- by means of the closed-loop control unit (11), a value of a manipulated variable of the closed-loop control is determined from the actual value and a predefined setpoint value of the controlled variable, and
- the compensation installation (3) is controlled depending on the value of the manipulated variable.

2. Method according to Claim 1, wherein the method is carried out repeatedly, wherein the actual value is transmitted at time intervals of less than 1 ms.

3. Method according to Claim 1 or 2, wherein a monomode optical waveguide is used as the optical waveguide (9).

4. Method according to any of Claims 1 to 3, wherein the actual value is amplified with a gain factor of at least 20 dB before being transmitted to the closed-loop control unit (11).

5. Method according to any of the preceding claims, wherein a voltage in the AC voltage grid (2) is used as the controlled variable.

6. Method according to any of the preceding claims, wherein a monitoring signal is generated by means of a monitoring unit (61) for monitoring the measuring unit, said monitoring signal being communicated to the second transceiver (10) via the optical waveguide (9), wherein, if the monitoring signal satisfies a predetermined condition, an alarm signal for fault indication is generated.

7. Method according to Claim 6, wherein a binary signal is used as the monitoring signal.

8. Method according to either of Claims 6 and 7, wherein the monitoring signal and the actual value are transmitted at identical time intervals.

9. Arrangement (1) for the grid stabilization of an AC voltage grid (2) comprising
- a controllable compensation installation (3) connectable to the AC voltage grid (2),
- a closed-loop control unit (11), which is connected to the compensation installation (3) on the output side and is configured to determine a value of a manipulated variable from an actual value and a setpoint value of a controlled variable, wherein the compensation installation (3) is controllable depending on the value of the manipulated variable,
- a measuring unit (6) for determining measured values for deriving a controlled variable, and
- a transmission line (9) connecting the measuring unit (6) and the closed-loop control unit (11),
**characterized by**
- a data processing unit (7) configured to ascertain a root-mean-square value of the measured values from a plurality of measured values determined and, depending on the root-mean-square value, an actual value of the controlled variable,
- an electro-optical transducer (71) connected to the data processing unit (7) on the input side and to a first transceiver (8) on the output side and configured to convert the actual value fed to it in the form of an electrical signal into a light signal of a first wavelength, wherein
- the first transceiver (8) is connected to the transmission line (9) on the output side and is configured to convert the actual value fed to it into a light signal of a second wavelength, which is different from the first wavelength, wherein the transmission line (9) is an optical waveguide configured to transmit the actual value converted into a light signal,
- a second transceiver (10) connected to the transmission line (9) on the input side and to an optoelectrical transducer (111) on the output side and configured to convert the actual value into the light signal of the first wavelength, wherein
- the optoelectrical transducer (111) is connected to the closed-loop control unit (11) on the output side and is configured to convert the actual value into an electrical signal.

10. Arrangement (1) according to Claim 9, wherein the optical waveguide (9) has a length of more than 100 km.

11. Arrangement (1) according to Claim 9 or 10, wherein the arrangement (1) is configured to ascertain and to transmit the actual value repeatedly at time intervals of less than 1 ms.

12. Arrangement (1) according to either of Claims 8 and 9, wherein the optical waveguide (9) is a monomode optical waveguide.

13. Arrangement (1) according to any of Claims 9 to 12, wherein the arrangement (1) furthermore comprises an amplifier unit (8) configured to amplify the actual value with a gain factor of at least 20 dB.

14. Arrangement (1) according to any of Claims 9 to 13, wherein the measuring unit (6) is configured for determining measured values of a voltage in the AC voltage grid (2) as the controlled variable.

15. Arrangement (1) according to any of Claims 9 to 14, wherein the arrangement (1) furthermore comprises a monitoring unit (61) configured to generate a monitoring signal for monitoring the measuring unit (6), which monitoring signal can be communicated to the second transceiver (10) via the optical waveguide (9), wherein, if the monitoring signal satisfies a predetermined condition, an alarm signal for fault indication is able to be generated.

## Revendications

1. Procédé de stabilisation d'un réseau (2) à tension alternative, au moyen d'un montage (3) de compensation pouvant être commandé et connecté au réseau à tension alternative, dans lequel
- on détermine une pluralité de valeurs de mesure d'une grandeur de réglage,
- on envoie les valeurs de mesure à une unité (7) de traitement de données,
- au moyen de l'unité (7) de traitement de données, on déduit, des valeurs de mesure, une valeur réelle de la grandeur de réglage en fonction d'une valeur efficace calculée auparavant des valeurs de mesure,
- on envoie la valeur réelle sous la forme d'un signal électrique à un transducteur (71) électrooptique, qui donne, du côté de la sortie, la valeur réelle sous la forme d'un signal lumineux d'une première longueur d'onde,
- on envoie la valeur réelle à un premier transformateur (8), qui transforme la valeur réelle en un signal lumineux d'une deuxième longueur d'onde différente de la première,
- on transmet la valeur réelle transformée à un deuxième transformateur (10) par une fibre (9) optique,
- le deuxième transformateur (10) transforme la valeur réelle en un signal lumineux de la première longueur d'onde et l'envoie à un transducteur (111) optoélectrique,
- le transducteur (111) optoélectrique donne, du côté de la sortie, la valeur réelle sous la forme d'un signal électrique que l'on envoie à une unité (11) de réglage du montage (3) de compensation,
- au moyen de l'unité (11) de réglage, on détermine, à partir de la valeur réelle et d'une valeur de consigne donnée à l'avance de la grandeur de réglage, une valeur d'une grandeur réglante du réglage et
- on commande le montage (3) de compensation en fonction de la valeur de la grandeur réglante.

2. Procédé suivant la revendication 1, dans lequel on effectue le procédé de manière répétée, la valeur réelle étant transmise à des intervalles de temps de moins de 1 ms.

3. Procédé suivant la revendication 1 ou 2, dans lequel on utilise une fibre optique monomode comme fibre (9) optique.

4. Procédé suivant l'une des revendications 1 à 3, dans lequel on amplifie la valeur réelle, avant la transmission à l'unité (11) de réglage d'un facteur d'amplification d'au moins 20 dB.

5. Procédé suivant l'une des revendications précédentes, dans lequel on utilise, comme grandeur de réglage, une tension du réseau (2) à tension alternative.

6. Procédé suivant l'une des revendications précédentes, dans lequel on produit, au moyen d'une unité (61) de contrôle de l'unité de mesure, un signal de contrôle que l'on transmet, par la fibre (9) optique, au deuxième transformateur (10), dans lequel, si le signal de contrôle satisfait une condition déterminée à l'avance, on produit un signal d'alerte pour l'indication d'un défaut.

7. Procédé suivant la revendication 6, dans lequel on utilise un signal binaire comme signal de contrôle.

8. Procédé suivant l'une des revendications 6 ou 7, dans lequel on transmet le signal de contrôle et la valeur réelle dans de mêmes intervalles de temps.

9. Système (1) de stabilisation d'un réseau (2) à tension alternative, comprenant
- un montage (3) de compensation pouvant être commandé, qui peut être connecté au réseau (2) à tension alternative,
- une unité (11) de réglage, qui est connectée du côté de la sortie au montage (3) de compensation et qui est conçue pour déterminer une valeur d'une grandeur réglante à partir d'une valeur réelle et d'une valeur de consigne d'une grandeur de réglage, dans lequel le montage (3) de compensation peut être commandé en fonction de la valeur de la grandeur réglante,
- une unité (6) de mesure pour déterminer des valeurs de mesure en vue de déduire une grandeur de réglage, ainsi que
- une ligne (9) de transmission reliant l'unité (6) de mesure et l'unité (11) de réglage,
**caractérisé par**
- une unité (7) de traitement de données conçue pour déterminer, à partir d'une pluralité de valeurs de mesure déterminées, une valeur efficace des valeurs de mesure et, en fonction de la valeur efficace, une valeur réelle de la grandeur de réglage,
- un transducteur (71) électrooptique, qui est relié, du côté de l'entrée, à l'unité (7) de traitement de données et, du côté de la sortie, à un premier transformateur (8) et qui est conçu pour transformer la valeur réelle, qui lui est envoyée sous la forme d'un signal électrique, en un signal lumineux d'une première longueur d'onde, dans lequel
- le premier transformateur (8) est relié, du côté de la sortie, à la ligne (9) de transmission et est conçu pour transformer la valeur réelle qui lui est envoyée en un signal lumineux d'une deuxième longueur d'onde différente de la première, la ligne (9) de transmission étant une fibre optique conçu pour transmettre la valeur réelle transformée en un signal lumineux,
- un deuxième transformateur (10), qui est relié, du côté de l'entrée, à la ligne (9) de transmission et, du côté de la sortie, à un transducteur (111) optoélectrique et qui est conçu pour transformer la valeur réelle en le signal lumineux de la première longueur d'onde, dans lequel
- le transducteur (111) optoélectrique est relié, du côté de la sortie, à l'unité (11) de réglage et est conçu pour transformer la valeur réelle en un signal électrique.

10. Système (1) suivant la revendication 9, dans lequel la fibre (9) optique a une longueur de plus de 100 km.

11. Système (1) suivant la revendication 9 ou 10, dans lequel le système est conçu pour déterminer et transmettre, de manière répétée, la valeur réelle à des intervalles de temps de moins de 1 ms.

12. Système (1) suivant l'une des revendications 8 ou 9, dans lequel la fibre (9) optique est une fibre optique monomode.

13. Système (1) suivant l'une des revendications 9 à 12, dans lequel le système comprend, en outre, une unité (8) d'amplification conçue pour amplifier la valeur réelle par un facteur d'amplification d'au moins 20 dB.

14. Système (1) suivant l'une des revendications 9 à 13, dans lequel l'unité (16) de mesure est conçue pour déterminer des valeurs de mesures d'une tension du réseau (2) à tension alternative comme grandeur de réglage.

15. Système (1) suivant l'une des revendications 9 à 14, dans lequel le système (1) comprend, en outre, une unité de contrôle conçue pour produire, pour le contrôle de l'unité (6) de mesure, un signal de contrôle, qui peut être transmis au deuxième transformateur (10) par la fibre (9) optique, dans lequel, si le signal de contrôle satisfait une condition déterminée à l'avance, un signal d'alerte peut être produit pour indiquer un défaut.
